# EUROPÄISCHE PATENTSCHRIFT

(11) **EP 3 013 664 B1**
(45) Veröffentlichungstag und Bekanntmachung des Hinweises auf die Patenterteilung: **20.11.2019**
(21) Anmeldenummer: 14726114.3
(22) Anmeldetag: 15.05.2014
(51) Int. Cl.: B61D 17/02

(54) **SCHIENENFAHRZEUG MIT VERKLEIDETEM FAHRWERK**
RAIL VEHICLE HAVING A CONCEALED UNDERCARRIAGE
VÉHICULE FERROVIAIRE ÉQUIPÉ D'UN TRAIN DE ROULEMENT CARÉNÉ

(30) Priorität: 26.06.2013 AT 504212013
(43) Veröffentlichungstag der Anmeldung: 04.05.2016
(73) Patentinhaber: Siemens Mobility GmbH, 1210 Wien (AT)
(72) Erfinder: KREUZWEGER, David, 8501 Lieboch (AT); KÜTER, Christian, A-8046 Stattegg (AT); SCHOBEGGER, Gerald, A-8051 Graz (AT); TEICHMANN, Martin, A-8045 Graz (AT)
(74) Vertreter: Deffner, Rolf
(86) Internationale Anmeldenummer: PCT/EP2014/059992
(87) Internationale Veröffentlichungsnummer: WO 2014/206643

(56) Entgegenhaltungen:
- EP-A1- 0 057 765
- EP-A1- 2 428 422
- DE-A1- 2 542 780
- DE-A1-102010 061 718
- DE-C- 726 181

## Beschreibung

### Technisches Gebiet

Die Erfindung betrifft ein Schienenfahrzeug mit verkleidetem Fahrwerk, insbesondere Drehgestell, wobei die Verkleidung zumindest Seitenelemente, die seitlich des Fahrwerks längs des Schienenfahrzeugs angeordnet sind, und ein Bodenelement umfasst, das an der Unterseite des Fahrwerks angeordnet ist.

Die Erfindung ist auf Drehgestelle, insbesondere auf innengelagerte Drehgestelle, anwendbar, wo die Achslager und die Rahmenteile sich zwischen den Rädern bzw. Radscheiben befinden.

### Stand der Technik

Der Fahrwiderstand von Zügen, insbesondere Hochgeschwindigkeitszügen, ist ganz wesentlich durch den aerodynamischen Fahrwiderstand bestimmt. Dieser aerodynamische Fahrwiderstand enthält einen relevanten Anteil aus dem Widerstand des Unterbodens des Schienenfahrzeugs, insbesondere der Freiräume, die für die Bewegung des Fahrwerks unter den Wagenkästen notwendig sind. Auch für die akustischen Eigenschaften von Schienenfahrzeugen sind diese Freiräume nachteilig.

Um diesbezüglich Verbesserungen zu erreichen, ist es bekannt, seitlich am Drehgestell des Schienenfahrzeugs Schürzen anzubringen.

Darüber hinaus ist es aus der WO 2010/086201 A1 bekannt, die Verkleidung als eine umlaufende Wand zum Umgreifen des Drehgestells und eine Befestigungseinrichtung zur Drehführung der umlaufenden Wand an ihrem oberen Rand an einem Wagenkasten des Schienenfahrzeugs derart auszubilden, dass die Drehung der umlaufenden Wand jeweils der Drehung des Drehgestells entspricht; die Verkleidung ist am unteren Rand der umlaufenden Wand mittels eines unterbodenartigen Abschlussteils abgedeckt, das Befestigungsmittel zu seiner Anbringung am Drehgestell aufweist. Hier sind die Schürzen also relativ zum Wagenkasten drehbar ausgeführt, ebenso ist der unterbodenartige Abschlussteil am Achslager oder Drehgestellrahmen angebunden.

In der WO 2012/069269 A1 sowie auch in der DE-PS-726 181 wird ebenfalls ein Schienenfahrzeug mit verkleidetem Fahrwerk gezeigt, wo die seitlichen Verkleidungselemente der Bewegung des Drehgestells folgen und mit einem Bodenelement eine einstückige Vollverkleidung des Drehgestells ausbilden.

Die bekannten, seitlich am Drehgestell des Schienenfahrzeugs angebrachten Schürzen lassen die aerodynamischen Eigenschaften der Unterseite des Fahrwerks außer Acht, die drehbaren seitlichen Verkleidungselemente mit ebenso drehbarem Bodenelement bedingen eine aufwändige Aufhängung der seitlichen Verkleidungselemente und verringern die Laufstabilität aufgrund ihrer vergleichsweise hohen Massenträgheitsmomente um die Hochachse des Fahrwerks.

### Darstellung der Erfindung

Es ist daher eine Aufgabe der vorliegenden Erfindung, ein Schienenfahrzeug mit verkleidetem Fahrwerk zur Verfügung zu stellen, das eine einfache Konstruktion der Seitenelemente bei gleichzeitiger Abdeckung der Unterseite des Fahrwerks ermöglicht.

Diese Aufgabe wird durch ein Schienenfahrzeug mit verkleidetem Fahrwerk mit den Merkmalen des Patentanspruchs 1 gelöst, wobei die Verkleidung zumindest Seitenelemente, die seitlich des Fahrwerks längs des Schienenfahrzeugs angeordnet sind, und ein Bodenelement umfasst, das an der Unterseite des Fahrwerks angeordnet ist.

Dabei ist erfindungsgemäß vorgesehen, dass
- die Seitenelemente fest mit dem Wagenkasten des Schienenfahrzeugs verbunden sind,
- das Bodenelement fest mit dem Fahrwerk verbunden ist und
- zwischen dem Bodenelement einerseits und den Seitenelementen andererseits jeweils ein Spalt vorgesehen ist, der sowohl im nicht ausgedrehten als auch im ausgedrehten Zustand des Fahrwerks einen Abstand zwischen den Rädern des Fahrwerks und dem Bodenelement einerseits und den Seitenelementen andererseits vorsieht. Vorteilhafte Ausgestaltungen der Erfindung sind in den jeweiligen abhängigen Ansprüchen definiert.

Dadurch, dass die Seitenelemente fest mit dem Wagenkasten des Schienenfahrzeugs verbunden sind, können diese einfach montiert werden. Sie können auch im Vergleich zu drehbaren Seitenelementen konstruktiv einfacher ausgeführt sein, weil sie geringeren Beschleunigungen ausgesetzt sind als drehbare Seitenelemente. Die Seitenelemente werden in der Regel bündig in die Seitenverkleidung des gesamten Wagenkastens integriert. Dabei kann es vorteilhaft sein, dass sowohl die Seitenelemente als auch das Bodenelement für Wartungsarbeiten einfach demontierbar oder aufklappbar ausgestaltet sind.

Die Seitenelemente schließen sonst - außerhalb der erfindungsgemäßen Abstände - in Längsrichtung vor bzw. nach den Rädern mit der Verkleidung des Schienenfahrzeugs ab, die bewegungsbedingten Abstände zwischen Seitenelementen und Rädern bzw. Bodenplatte werden somit in Strömungs- bzw. Fahrtrichtung durch die davor angeordneten Bereiche der Seitenelemente strömungstechnisch abgeschirmt.

Durch die Verbindung der Seitenelemente mit dem Wagenkasten haben die Seitenelemente auch keinen negativen Einfluss auf die Laufstabilität der Fahrwerke, als feststehende Teile können sie zudem einfacher und kostengünstiger strömungstechnisch optimiert werden.

Das Seitenelement kann in einer Ausführungsform soweit nach unten gezogen ausgebildet sein, dass es in der Seitenansicht mindestens die halbe Radfläche des Fahrwerks überdeckt.

Das Bodenelement schließt die Unterseite des Fahrwerks aerodynamisch ab, zwischen Bodenelement und Seitenelementen muss nur so viel Abstand gelassen werden, dass sich die Räder des Fahrwerks ungehindert drehen können und das Fahrwerk alle vorgesehenen Bewegungen im Betrieb durchführen kann. Dieser schlitzförmige Freiraum liegt am besten aerodynamisch im Einflussbereich der Radverwirbelung, sodass durch den Spalt keine zusätzliche Verwirbelung der Luft an einer anderen Stelle erfolgt. Der Spalt kann daher in einem Ausführungsbeispiel großteils neben den Rädern, also außerhalb der Räder, angeordnet sein.

Eine andere vorteilhafte Gestaltung dieses Freiraums besteht darin, den Spalt im Windschatten der Räder zu positionieren, da auch dieser Bereich im Einflussbereich der Radverwirbelung liegt.

Im Übrigen erscheint es vorteilhaft, diesen Querspalt generell in unmittelbarer Radnähe auszuführen, da hierdurch eine gezielte Luftzuführung für die Räder und Bremsen und damit eine entsprechende Kühlung realisiert werden kann.

Das Bodenelement wirkt sich auf die Laufstabilität des Fahrwerks kaum störend aus, da seine Masse einen - relativ zu einer Vollverkleidung, die am Drehgestell angebracht ist - geringen Trägheitsradius um die Hochachse aufweist.

Im Fall, dass das Fahrwerk ein Drehgestell ist, kann dies etwa so ausgeführt sein, dass die untere Kante der Seitenelemente in Längsbereichen, die näher an der Drehachse des Drehgestells liegen, näher an das Bodenelement heranreichen als die untere Kante in Längsbereichen, die weiter von der Drehachse entfernt sind.

Bei einem zweiachsigen Fahrwerk kann etwa die untere Kante der Seitenelemente zwischen den Rädern unterschiedlicher Radachsen näher an das Bodenelement heranreichen als im Längsbereich der Räder, da sich die Drehachse des Fahrwerks zwischen den Radachsen befindet.

Insbesondere bei innengelagerten Fahrwerken kann vorgesehen sein, dass die Seitenelemente für Feder- und/oder Dämpfungselemente (wie Luftfedern oder Schlingerdämpfer) Ausbuchtungen nach außen aufweisen. Sonst sollte sich der Querschnitt der Seitenelemente im Längsverlauf aus strömungstechnischen Gründen nicht oder nicht allzu sehr ändern.

Da der Wagenkasten oft breiter ist als die Achslänge und die Seitenwände bündig an die Verkleidung des Wagenkastens anschließen, kann es sinnvoll sein, dass die Seitenelemente vom Wagenkasten nach unten innen zum Bodenelement hin gekrümmt sind.

Um eine möglichst vollständige Verkleidung des Fahrwerks zu erreichen, kann vorgesehen sein, dass das Bodenelement Ausnehmungen für die Räder aufweist und sonst in Querrichtung des Fahrwerks üblicherweise bis zur Außenseite der Räder reicht. In dem Fall, wo der erfindungsgemäße Spalt großteils oder auch im Windschatten der Räder liegt, ist das Bodenelement in Querrichtung entsprechend kürzer. Dann kann also vorgesehen sein, dass das Bodenelement Ausnehmungen für die Räder aufweist und sonst in Querrichtung des Fahrwerks zumindest bis zur Innenseite der Räder reicht. In Höhenrichtung ist das Bodenelement jedenfalls unter den Radachsen angeordnet.

Im einfachsten Fall kann das Bodenelement als weitgehend ebene Platte ausgebildet sein, die beispielsweise im Wesentlichen rechteckige Form aufweist. Die Ränder des Bodenelements können zudem an die optimale Luftströmung im Bereich der Spalte angepasst sein, indem sie z.B. nach oben abgerundet oder abgewinkelt werden.

Des Weiteren kann vorgesehen sein, dass das Bodenelement zumindest einen Durchbruch aufweist, durch welchen Bauteile ragen. Als Bauteile versteht man hier zum Beispiel Motoren, Getriebe oder Lager. Es steht dadurch mehr Bauraum für diese Bauteile zur Verfügung und die Bauteile werden durch den Fahrtwind gekühlt. Damit durch diese Durchbrüche die aerodynamischen Eigenschaften des Bodenelements nicht zu sehr beeinträchtigt werden, können die Ränder des Durchbruchs aerodynamisch bündig mit den Bauteilen ausgeführt werden.

Um auch einen aerodynamisch günstigen Übergang vom Bodenelement auf die Wagenkastenverkleidung zu erzielen, kann vorgesehen sein, dass die Verkleidung ein mit dem Wagenkasten fest verbundenes Übergangselement umfasst, welches das Bodenelement aerodynamisch bündig mit der Wagenkastenverkleidung verbindet. So kann etwa die Kante des Bodenelements in Strömungsrichtung zum Wagenboden hin durch ein rampenförmiges Übergangselement bedeckt sein, welches auch bei allen Betriebsfederwegen des Fahrwerks eine günstige Luftführung gewährleistet.

Dabei kann das Übergangselement an jener Seite, die dem Bodenelement zugewandt ist, breiter ausgeführt sein als das Bodenelement. Dadurch wird auch bei Ausdrehung des Fahrwerks eine günstige Anströmung erzielt.

Bei der Ausführung der Erfindung ist natürlich darauf zu achten, dass das Lichtraumprofil nicht verletzt wird. Als Lichtraumprofil wird eine definierte Umgrenzungslinie bezeichnet, die meist für die senkrechte Querebene eines Fahrweges, hier von Bahngleisen, bestimmt wird. Mit dem Lichtraumprofil wird einerseits der "lichte Raum" vorgeschrieben, der auf dem Fahrweg von Gegenständen freizuhalten ist, andererseits dient es auch als konstruktive Vorgabe für die Bemessung der Schienenfahrzeuge. Diese dürfen im Querschnitt nicht die vorgegebenen Grenzlinien überschreiten, wobei auch berücksichtigt werden muss, ob sie bei besonderer Länge auch in Kurven noch innerhalb des Lichtraumprofils bleiben. Die verschiedenen Fahrzeugbegrenzungslinien sind länderspezifisch geregelt und werden z.B. für den UIC-Bereich vom Internationalen Eisenbahnverband in den UIC-Merkblättern festgelegt. Für die hier gültigen Begrenzungslinien stellt die erfindungsgemäße Verkleidung in Kombination mit einem innengelagerten Fahrwerk eine besonders vorteilhafte Ausführung dar, da sich die Seitenelemente in Längsrichtung besonders gut an die Kontur der Seitenverkleidung des restlichen Wagenkastens anlegen. Ausbeulungen oder Ausschnitte in den Seitenelementen für die Radsatzlager, wie sie bei außengelagerten Drehgestellen erforderlich werden könnten, können in diesem Fall vermieden werden.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
- Fig. 1: ein verkleidetes Fahrwerk in perspektivischer Sicht von seitlich unten,
- Fig. 2: das Fahrwerk aus Fig. 1 in Seitenansicht,
- Fig. 3: die Verkleidungsteile aus Fig. 1 bzw. 2,
- Fig. 4: ein verkleidetes Fahrwerk in perspektivischer Sicht von hinten unten,
- Fig. 5: ein verkleidetes Fahrwerk in Untersicht.

### Ausführung der Erfindung

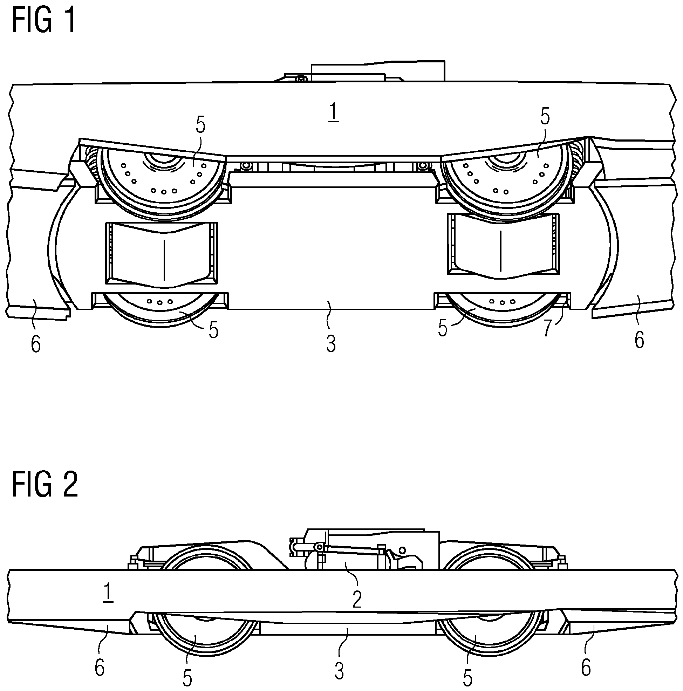

In Fig. 1 ist ein verkleidetes Fahrwerk in perspektivischer Sicht von seitlich unten dargestellt. Es sind ein Seitenelement 1, ein als ebene Bodenplatte ausgebildetes Bodenelement 3 sowie zwei Übergangselemente 6 erkennbar, welche das Fahrwerk, das hier als Drehgestell ausgeführt ist, verkleiden. Nicht sichtbar ist hier das Seitenelement 1 auf der Rückseite des Fahrwerks. Vom Fahrwerk sind lediglich die Räder 5 teilweise zu erkennen.

Das Bodenelement 3 ist bis auf die rechteckigen Ausnehmungen 7 an seinen geraden Längskanten und die kreisbogenförmigen Abrundungen an seinen Enden im Wesentlichen rechteckig. Die Übergangselemente 6 schließen beidseits an das Bodenelement 3 an, wobei nur ein schmaler kreisringförmiger Spalt zwischen dem kreisbogenförmigen Enden des Bodenelements 3 und dem ebenso kreisbogenförmigen Übergangselement 6 vorhanden ist.

In Fig. 2, wo durch Weglassen des Wagenkastens bzw. von dessen Verkleidung ein weiterer Teil des Fahrwerks 2 zu sehen ist, erkennt man, dass sich die untere Kontur des Bodenelements 3 über den kreisringförmigen Spalt ohne Versetzung in Höhenrichtung in der unteren Kontur des Übergangselements 6 fortsetzt. Die untere Kontur des Übergangselements 6 steigt sodann rampenförmig an, um dann in den hier nicht dargestellten Unterboden des Wagenkastens möglichst stetig überzugehen.

Die untere Kontur des Seitenelements 1 steigt im Bereich der Räder 5 mit steigender Entfernung von der Drehachse des Drehgestells an und fällt nach den Rädern 5 wieder auf die gleiche Höhe wie zwischen den Rädern 5 einer Seite ab. Der Wagenkasten würde - in Höhenrichtung gesehen - noch einen Teil der Räder 5 oberhalb der Radachsen abdecken, die am Wagenkasten fix angeordneten Seitenelemente 1 überdecken dann einen Bereich bis unter die Radachsen der Räder 5. Das Seitenelement 1 ist also so weit nach unten gezogen, dass es (gemeinsam mit der hier nicht dargestellten Verkleidung des Wagenkastens) mehr als die halbe Fläche der beiden Räder 5 auf dieser Seite des Fahrwerks 2 überdeckt.

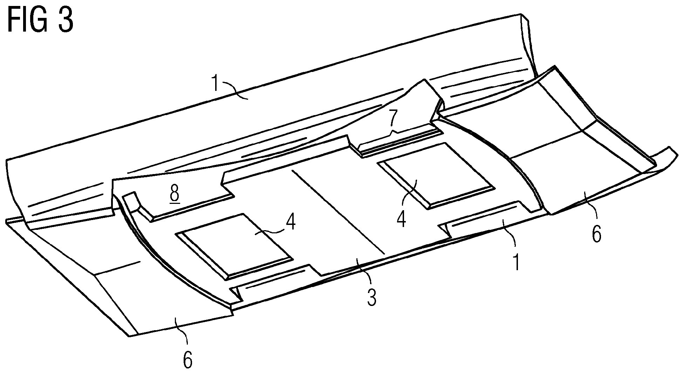

In Fig. 3 sind lediglich die Verkleidungsteile 1, 3 und 6 aus Fig. 1 bzw. 2 dargestellt. Bereits hier ist zu erkennen, dass die untere Kante der Seitenelemente 1 in der Mitte des Bodenelements 3 näher an dieses heranreichen als im Bereich der Ausnehmungen 7 für die Räder 5. Die Breite des Spalts, der zwischen Seitenelement 1 und Bodenelement 3 entsteht, erweitert sich von der Mitte des Bodenelements 3 langsam und fällt dann nach der Ausnehmung 8 rasch wieder etwa auf das Maß in der Mitte des Bodenelements 3 ab. Dieses Maß wird konstruktiv möglichst klein ausgeführt; es muss jedenfalls die Querbewegungen des Drehgestells zulassen.

Das Bodenelement 3 weist hier im Bereich der Radachsen jeweils einen Durchbruch 4 auf, durch den ein Bauteil nach unten über das Bodenelement 3 hinausragen kann. Der Übergang von der Unterseite des Bodenelements 3 zu diesem Bauteil wird am besten möglichst ohne Stufe ausgebildet, damit sich hier keine Verwirbelungen bilden.

Es ist auch zu erkennen, dass das Bodenelement 3 an seinen Enden einen gebogenen Längsspalt zur Wagenkastenverkleidung, nämlich zum Übergangselement 6, aufweist, der bei Ausdrehung des Drehgestells eine nahezu unveränderte Spaltweite aufweist, indem nämlich hier sowohl das Bodenelement 3 an seinen Längsenden als auch die Übergangselemente 6 an ihren, dem Bodenelement 3 zugewandten Seiten kreisbogenförmig (konzentrisch zur Drehachse des Drehgestells) ausgebildet sind.

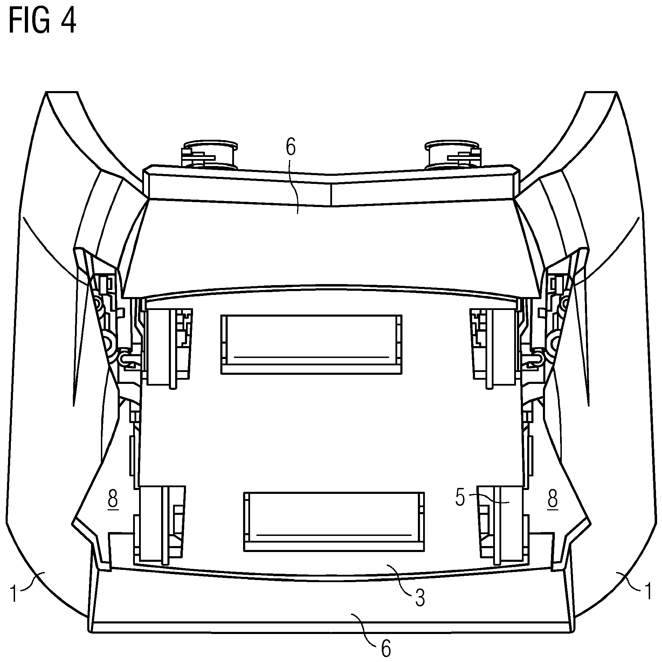

In Fig. 4 ist das verkleidete Fahrwerk in perspektivischer Sicht von hinten unten dargestellt. Es ist erkennbar, dass die Breite des Übergangselements 6 mit zunehmendem Abstand vom Bodenelement 3 abnimmt und entsprechend die Seitenelemente 1 weiter nach innen gehen, um direkt seitlich an die Übergangselemente 6 anzuschließen. Die Spalte 8 zwischen dem Bodenelement 3 (und den Rädern 5) einerseits und den Seitenelementen 1 andererseits verbreitern sich in Fahrtrichtung: zwischen den Rädern 5 unterschiedlicher Radachsen ist der Spalt 8 schmäler als im Längsbereich der Räder 5. Beide Spalte 8 (über alle vier Räder 5) bilden dadurch gemeinsam einen X-förmigen Verlauf.

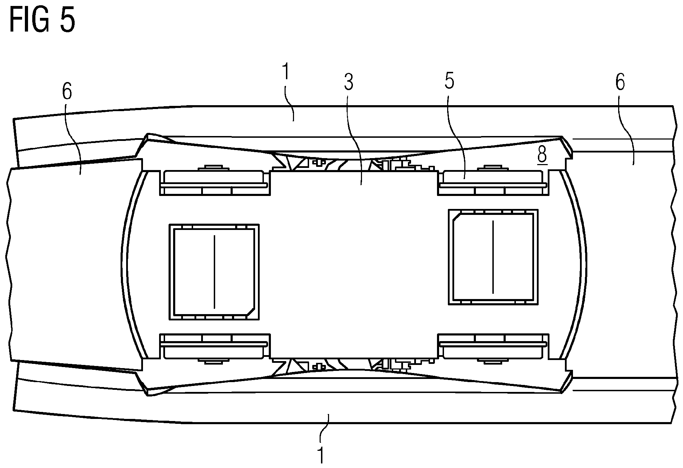

In Fig. 5 ist das verkleidete Fahrwerk nochmals in Untersicht dargestellt, und zwar ohne den Wagenkasten.

### Bezugszeichenliste:

- 1: Seitenelement
- 2: Fahrwerk
- 3: Bodenelement
- 4: Durchbruch
- 5: Rad
- 6: Übergangselement
- 7: Ausnehmung des Bodenelements 3 für Rad 5
- 8: Spalt zwischen dem Bodenelement 3 und den Seitenelementen 1

## Patentansprüche

1. Schienenfahrzeug mit verkleidetem Fahrwerk (2), insbesondere Drehgestell, wobei die Verkleidung zumindest Seitenelemente (1), die seitlich des Fahrwerks längs des Schienenfahrzeugs angeordnet sind, und ein Bodenelement (3) umfasst, das an der Unterseite des Fahrwerks angeordnet ist, **dadurch gekennzeichnet, dass**
- die Seitenelemente (1) fest mit dem Wagenkasten des Schienenfahrzeugs verbunden sind,
- das Bodenelement (3) fest mit dem Fahrwerk verbunden ist und
- zwischen dem Bodenelement (3) einerseits und den Seitenelementen (1) andererseits jeweils ein Spalt (8) vorgesehen ist, der sowohl im nicht ausgedrehten als auch im ausgedrehten Zustand des Fahrwerks (2) einen Abstand zwischen den Rädern (5) des Fahrwerks und dem Bodenelement (3) einerseits und den Seitenelementen (1) andererseits vorsieht.

2. Schienenfahrzeug nach Anspruch 1, **dadurch gekennzeichnet, dass** der Spalt (8) großteils außerhalb der Räder (5) vorgesehen ist.

3. Schienenfahrzeug nach Anspruch 1 oder 2, **dadurch gekennzeichnet, dass** der Spalt (8) im Windschatten der Räder (5) vorgesehen ist.

4. Schienenfahrzeug nach einem der Ansprüche 1 bis 3, **dadurch gekennzeichnet, dass** im Falle des Drehgestells als Fahrwerk die untere Kante der Seitenelemente (1) in Längsbereichen, die näher an der Drehachse des Drehgestells liegen, näher an das Bodenelement (3) heranreichen als die untere Kante in Längsbereichen, die weiter von der Drehachse entfernt sind.

5. Schienenfahrzeug nach einem der Ansprüche 1 bis 4, **dadurch gekennzeichnet, dass** die Seitenelemente (1) für Feder- und/oder Dämpfungselemente Ausbuchtungen nach außen aufweisen.

6. Schienenfahrzeug nach einem der Ansprüche 1 bis 5, **dadurch gekennzeichnet, dass** die Seitenelemente (1) vom Wagenkasten nach unten innen zum Bodenelement (3) hin gekrümmt sind.

7. Schienenfahrzeug nach einem der Ansprüche 1 bis 6, **dadurch gekennzeichnet, dass** das Bodenelement (3) Ausnehmungen (7) für die Räder (5) aufweist und sonst in Querrichtung des Fahrwerks (2) zumindest bis zur Innenseite der Räder (5) reicht.

8. Schienenfahrzeug nach einem der Ansprüche 1 bis 7, **dadurch gekennzeichnet, dass** das Bodenelement (3) als weitgehend ebene Platte ausgebildet ist.

9. Schienenfahrzeug nach einem der Ansprüche 1 bis 8, **dadurch gekennzeichnet, dass** das Bodenelement (3) zumindest einen Durchbruch (4) aufweist, durch welchen Bauteile ragen.

10. Schienenfahrzeug nach Anspruch 9, **dadurch gekennzeichnet, dass** die Ränder des Durchbruchs (4) aerodynamisch bündig mit den Bauteilen ausgeführt sind.

11. Schienenfahrzeug nach einem der Ansprüche 1 bis 10, **dadurch gekennzeichnet, dass** die Verkleidung ein mit dem Wagenkasten fest verbundenes Übergangselement (6) umfasst, welches das Bodenelement (3) aerodynamisch bündig mit der Wagenkastenverkleidung verbindet.

12. Schienenfahrzeug nach Anspruch 11, **dadurch gekennzeichnet, dass** das Übergangselement (6) an jener Seite, die dem Bodenelement (3) zugewandt ist, breiter ausgeführt ist als das Bodenelement (3).

13. Schienenfahrzeug nach einem der Ansprüche 1 bis 12, **dadurch gekennzeichnet, dass** das Bodenelement (3) an seinen Enden einen gebogenen Längsspalt zur Wagenkastenverkleidung, insbesondere zum Übergangselement (6), aufweist, der bei Ausdrehung des Drehgestells eine nahezu unveränderte Spaltweite aufweist.

14. Schienenfahrzeug nach einem der Ansprüche 1 bis 13, **dadurch gekennzeichnet, dass** das Seitenelement (1) soweit nach unten gezogen ausgebildet ist, dass es in der Seitenansicht mindestens die halbe Radfläche des Fahrwerks (2) überdeckt.

## Claims

1. Rail vehicle having a concealed undercarriage (2), in particular a bogie, wherein the fairing comprises at least side elements (1) that are arranged along the rail vehicle on the sides of the undercarriage and a bottom element (3) that is arranged on the underside of the undercarriage, **characterised in that**
- the side elements (1) are fixedly connected to the car body of the rail vehicle,
- the bottom element (3) is fixedly connected to the undercarriage, and
- a gap (8) is provided in each case between the bottom element (3) and the side elements (1), wherein said gap (8) ensures a clearance between the wheels (5) of the undercarriage and both the bottom element (3) and the side elements (1), in both non-turned and turned states of the undercarriage (2).

2. Rail vehicle according to claim 1, **characterised in that** the gap (8) is provided to a large extent outside the wheels (5).

3. Rail vehicle according to claim 1 or 2, **characterised in that** the gap (8) is provided in the wind shadow of the wheels (5).

4. Rail vehicle according to one of claims 1 to 3, **characterised in that** if the undercarriage is a bogie the lower edge of the side elements (1) in longitudinal regions which are closer to the axis of rotation of the bogie extends further towards the bottom element (3) than the lower edge in longitudinal regions which are further from the axis of rotation.

5. Rail vehicle according to one of claims 1 to 4, **characterised in that** the side elements (1) have convex bulges for spring elements and/or damping elements.

6. Rail vehicle according to one of claims 1 to 5, **characterised in that** the side elements (1) are curved downwards and inwards from the car body towards the bottom element (3).

7. Rail vehicle according to one of claims 1 to 6, **characterised in that** the bottom element (3) has recesses (7) for the wheels (5) and otherwise extends in a transverse direction of the undercarriage (2) at least as far as the inside of the wheels (5).

8. Rail vehicle according to one of claims 1 to 7, **characterised in that** the bottom element (3) is designed as a largely flat plate.

9. Rail vehicle according to one of claims 1 to 8, **characterised in that** the bottom element (3) has at least one opening (4) through which components project.

10. Rail vehicle according to claim 9, **characterised in that** the edges of the opening (4) are so embodied as to be aerodynamically flush with the components.

11. Rail vehicle according to one of claims 1 to 10, **characterised in that** the fairing comprises a transition element (6) which is fixedly connected to the car body and connects the bottom element (3) to the car body fairing in a manner which is aerodynamically flush.

12. Rail vehicle according to claim 11, **characterised in that** the transition element (6) is wider, on its side which faces towards the bottom element (3), than the bottom element (3).

13. Rail vehicle according to one of claims 1 to 12, **characterised in that** the bottom element (3) has at its ends a curved longitudinal gap relative to the car body fairing, in particular the transition element (6), said gap having a width which is virtually unchanged when the bogie turns.

14. Rail vehicle according to one of claims 1 to 13, **characterised in that** the side element (1) is so designed as to extend so far downwards as to cover at least half of the wheel surface of the undercarriage (2) in a side view.

## Revendications

1. Véhicule ferroviaire équipé d'un train de roulement (2), notamment d'un bogie, caréné, le carénage comportant au moins des éléments latéraux (1) qui sont disposés sur les côtés du train de roulement le long du véhicule ferroviaire, et un élément de fond (3) qui est disposé sur le dessous du train de roulement, **caractérisé en ce que**
- les éléments latéraux (1) sont reliés solidairement à la caisse du véhicule ferroviaire,
- l'élément de fond (3) est relié solidairement au train de roulement et,
- entre l'élément de fond (3) d'une part et les éléments latéraux (1) d'autre part, il est prévu à chaque fois un intervalle (8) qui ménage un espacement entre les roues (5) du train de roulement et d'une part l'élément de fond (3) et d'autre part les éléments latéraux (1), aussi bien lorsque le train de roulement (2) est en position pivotée que lorsqu'il n'est pas en position pivotée.

2. Véhicule ferroviaire selon la revendication 1, **caractérisé en ce que** l'intervalle (8) est prévu en grande partie à l'extérieur des roues (5).

3. Véhicule ferroviaire selon la revendication 1 ou 2, **caractérisé en ce que** l'intervalle (8) est prévu sur le côté des roues (5) qui est abrité.

4. Véhicule ferroviaire selon l'une des revendications 1 à 3, **caractérisé en ce que**, dans le cas du bogie en tant que train de roulement, l'arête inférieure des éléments latéraux (1) dans des zones longitudinales qui sont plus proches de l'axe de rotation du bogie s'approche plus de l'élément de fond (3) que l'arête inférieure dans des zones longitudinales qui sont plus éloignées de l'axe de rotation.

5. Véhicule ferroviaire selon l'une des revendications 1 à 4, **caractérisé en ce que** les éléments latéraux (1) présentent des renflements vers l'extérieur pour des éléments de suspension et/ou d'amortissement.

6. Véhicule ferroviaire selon l'une des revendications 1 à 5, **caractérisé en ce que** les éléments latéraux (1) sont courbés de la caisse vers le bas, sur l'intérieur, en direction de l'élément de fond (3).

7. Véhicule ferroviaire selon l'une des revendications 1 à 6, **caractérisé en ce que** l'élément de fond (3) comporte des évidements (7) pour les roues (5) et s'étend sinon au moins jusqu'à la face interne des roues (5) dans la direction transversale du train de roulement (2).

8. Véhicule ferroviaire selon l'une des revendications 1 à 7, **caractérisé en ce que** l'élément de fond (3) est conçu en tant que plaque presque entièrement plane.

9. Véhicule ferroviaire selon l'une des revendications 1 à 8, **caractérisé en ce que** l'élément de fond (3) comporte au moins une ouverture (4) à travers laquelle des éléments de construction font saillie.

10. Véhicule ferroviaire selon la revendication 9, **caractérisé en ce que** les bords de l'ouverture (4) sont exécutés de manière affleurée, aérodynamique, avec les éléments de construction.

11. Véhicule ferroviaire selon l'une des revendications 1 à 10, **caractérisé en ce que** le carénage comprend un élément de transition (6) relié solidairement à la caisse, qui relie l'élément de fond (3) de manière affleurée, aérodynamique, au carénage de la caisse.

12. Véhicule ferroviaire selon la revendication 11, **caractérisé en ce que** l'élément de transition (6) est exécuté de manière à être plus large que l'élément de fond (3) sur son côté tourné vers l'élément de fond (3).

13. Véhicule ferroviaire selon l'une des revendications 1 à 12, **caractérisé en ce que** l'élément de fond (3) présente à ses extrémités un intervalle longitudinal courbé, du côté du carénage de la caisse, notamment du côté de l'élément de transition (6), intervalle dont la largeur demeure pratiquement inchangée lors du pivotement du bogie.

14. Véhicule ferroviaire selon l'une des revendications 1 à 13, **caractérisé en ce que** l'élément latéral (1) est exécuté de manière à descendre si bas qu'il couvre, en vue latérale, au moins la moitié de la surface des roues du train de roulement (2).
